# EUROPEAN PATENT SPECIFICATION

(11) **EP 2 632 708 B1**
(45) Date of publication and mention of the grant of the patent: **24.01.2018**
(21) Application number: 11782457.3
(22) Date of filing: 28.10.2011
(51) Int. Cl.: B32B 3/12, B32B 5/02, B32B 5/14, C08J 5/24

(54) **COMPOSITE LOAD BEARING PANELS, RESIN-IMPREGNATED FIBRE MATS AND METHODS FOR THEIR MANUFACTURE**
LASTTRAGENDE VERBUNDPLATTEN, HARZIMPRÄGNIERTE FASERMATTEN UND VERFAHREN ZU IHRER HERSTELLUNG
PANNEAUX PORTEURS COMPOSITES, TAPIS EN FIBRES IMPRÉGNÉES DE RÉSINE ET PROCÉDÉS DE FABRICATION DE CEUX-CI

(30) Priority: 28.10.2010 GB 201018205
(43) Date of publication of application: 04.09.2013
(73) Proprietor: Eco-Technilin SAS, 76190 Valliquerville (FR)
(72) Inventor: SWEATMAN, Timothy, John, Cambridgeshire PE28 4YQ (GB); SPINNEY, Douglas, Montague, Cambridgeshire PE28 9DF (GB)
(74) Representative: Naylor, Matthew John
(86) International application number: PCT/GB2011/001542
(87) International publication number: WO 2012/056202

(56) References cited:
- WO-A1-2010/146355
- DE-A1- 10 132 749
- JP-A- 7 216 111
- US-A1- 2006 046 042
- US-A1- 2009 302 462

## Description

### BACKGROUND TO THE INVENTION

### Field of the invention

The present invention relates to resin-impregnated fibre mats, and methods for their manufacture, for use in the manufacture of composite load bearing panels. The present invention also relates to methods for the manufacture of composite load bearing panels and to the load bearing panels themselves. The invention has particular, but not necessarily exclusive, application to load bearing panels for automotive applications.

### Related art

WO 2010/146355 discloses the manufacture of composite panels. The panels are formed with a core of a suitable material such as cork, paper or card. Resin-impregnated natural fibre mats are applied to the upper and lower faces of the core in a sandwich-type construction. The structure is pressed and heated to cure the resin. In this process, the resin-impregnated mat is compressed to form a skin layer. In WO 2010/146355, the resin is a sugar-based bio-resin, specifically furan resin. This resin has advantageous properties in terms of environmental impact, safety of handling, strength and fire retardance.

Cageao et al (2004) [RA Cageao, JM Lorenzo and K Franken "Studies of Composites Made with Baypreg® F: Component Selection for Optimal Mechanical Properties" Polyurethanes October 18-20 2004, pp. 513-519] discloses the manufacture of a load bearing panel having a low density core with upper and lower skin layers formed of fibre reinforced polyurethane. The low density core may be formed from paper honeycomb. The skins are formed by impregnating a fibre mat such as a glass fibre mat with polyurethane resin and curing the resin. The dry fibre mat is first applied to the core and then the fibre mat is sprayed with polyurethane resin. The wet sandwich is then pressed and heated to cure the resin. The use of polyurethane resin presents very significant health and safety issues, since the components of the resin are known to be harmful to health - for example, isocyanates are known skin and respiratory sensitizers. Press curing of polyurethane resin typically requires the use of a sealed press. The finished product is disclosed being for use, for example, as a car boot load floor.

### SUMMARY OF THE INVENTION

It is widely acknowledged in the automotive industry that further progress is necessary towards the use of materials and manufacturing processes that have a lower environmental impact than those conventionally used. However, automotive manufacturers require that the mechanical properties of replacement constructional materials are comparable to conventional constructional materials. For this reason, the present inventors have aimed to develop replacement load bearing panels for the automotive industry that do not have the environmental and heath and safety disadvantages of the boards of the type disclosed in Cageao et al (2004), but which have similar or better mechanical properties.

The present invention has been devised in order to address at least one of the above problems. Preferably, the present invention reduces, ameliorates, avoids or overcomes at least one of the above problems.

The present inventors have realised that it is possible to further develop the technology first disclosed in WO 2010/146355 in order to provide a load bearing panel formed using resin-impregnated natural fibre mats, the panel having excellent mechanical properties. A major realisation by the inventors is that it is necessary to consider separately the function of the resin at both faces of each skin layer. Each skin layer can be considered to have a first face (the A face) which forms an outermost face of the panel and a second face (the B face) which makes contact with the core. The resin at the second face (B face) must bond with the core. The resin at the first face (A face) need not bond with the core but should form a satisfactory surface finish. Furthermore, the resin at the first face (A face) should not slow down or affect the curing of the resin at the second face (B face). This is an important consideration because the process time required to cure the panel affects the suitability of the technology for commercial implementation.

Accordingly, in a general aspect, the present invention provides a first resin at the first face (A face) of the natural fibre mat and a second resin at the second face (B face) of the natural fibre mat, wherein the second resin differs from the first resin in terms of composition, quantity, curing temperature, curing speed, viscosity and/or water content. In a first preferred aspect, the present invention provides a natural fibre mat at least partially impregnated with bio-resin as set out in claim 1.

In a second preferred aspect, the present invention provides a method of manufacturing a natural fibre mat at least partially impregnated with bio-resin as set out in claim 2.

In a third preferred aspect, the present invention provides a method for manufacturing a composite load bearing panel having a sandwich construction with a paper or card cellular core and upper and lower skin layers comprising natural fibre and cured bio-resin as set out in claim 3.

In a fourth preferred aspect, the present invention provides a composite load bearing panel as set out in claim 14.

Where the description below makes reference to a bio-resin, it is to be understood that for embodiments of the invention, the bio-resin is a furan resin, such as a resin comprising prepolymers of furfuryl alcohol. The cured resin may therefore be a poly(furfuryl alcohol). The furan resin may be derived from sugar cane. Preferably, the furan resin comprises furfural (furan-2-carbaldehyde) or a derivative of furfural such as furfural alcohol, furan, tetrahydrofuran and tertahydrofurfural alcohol (collectively referred to as furans).

The general, first, second, third and/or fourth aspects of the invention may be combined with one or more of each other. Furthermore, they may have any one or, to the extent that they are compatible, any combination of the following optional features.

The second bio-resin may differ the first bio-resin in particular in that the second bio-resin may cure faster and/or at a lower temperature than the first bio-resin.

The application of the resin to the respective faces of the natural fibre mat may be achieved through different processes. For example one face may be contact coated, e.g. using a roller coating process. The other side may be sprayed. Alternative coating processes include blade impregnation coating, sprinkling, painting, dipping, etc. The purpose of using different application processes relates to the different bio-resins having different physical properties (e.g. different viscosity) and so the different bio-resins are most efficiently applied to the mat using different application processes. Furthermore, the different application processes allows different quantities of resin to be applied to each face.

The characteristics of the final product can be varied considerably according to need by varying the distribution of the resin through the natural fibre mat, its thickness and the pressure applied.

The process of impregnation of the resin into the natural fibre mat can be in the form of a continuous process. In that case, the width of the mat is limited only by the width of the coating machinery. Furthermore, the manufacture of the board itself (including the pressing and curing step) can be part of the continuous process. The resulting sheet of board may then be guillotined to size as it emerges from the production machinery. Alternatively, the resin-impregnated natural fibre mat can be used as a prepreg, the prepreg being cut to length as desired, applied to the core and then pressed and cured in a static press.

The thickness of the core is preferably at least 5mm or at least 10mm. The thickness of each skin layer (after the curing step) is preferably at least 5 times smaller than the thickness of the core.

The paper or card core may be of honeycomb construction.

For each skin layer, the natural fibres are preferably arranged substantially randomly but substantially parallel to each face of the skin layer. The natural fibres may have an average length of at least 10mm, more preferably at least 20mm, at least 30mm, at least 40mm, at least 50mm, at least 60mm or at least 70mm. The fibres may be processed (e.g. cut) to have a maximum length of up to 150mm, for example.

Preferably, the natural fibres are plant-derived fibres. Preferably, the plant-derived fibres are one or more selected from the following: hemp, jute, flax, ramie, kenaf, rattan, soya bean fibre, okra fibre, cotton, vine fibre, peat fibre, kapok fibre, sisal fibre, banana fibre or other similar types of bast fibre material. Such fibres are considered to be annually renewable, in that they are based on a crop which can be grown, harvested and renewed annually.

Preferably, the natural fibre mat is a non-woven mat formed by needle punching. Alternatively, air laying may be used. Non-woven mats are preferred. However, woven mats may be used. The area density of the natural fibre mat may be in the range 300-3000 grams per square metre (gsm).

Preferably, the natural fibre mat is dried before use in the process. A natural fibre mat with moisture content of less than 5wt% is suitable, e.g. about 3wt%.

The curing process for the board includes heating. The heating step typically heats the panel to a temperature of at least 130°C. Preferably, in this step, the panel is heated to a temperature of 250°C or lower, more preferably 200°C or lower. A typical temperature for this heating step is 150-190°C.

The curing process for the panel also includes pressing. By the combination of heating and pressing, the impregnated natural fibre mat is typically permanently compressed so that the density of the skin layer after heating and pressing is at least three times (preferably at least four times or at least five times) the density of the impregnated natural fibre mat before heating and pressing.

A furan resin may be produced in which furfural replaces formaldehyde in a conventional production of a phenolic resin. The furan resin cross links (cures) in the presence of a strong acid catalyst via condensation reactions. Furfural is an aromatic aldehyde, and is derived from pentose (C5) sugars, and is obtainable from a variety of agricultural byproducts. It is typically synthesized by the acid hydrolysis and steam distillation of agricultural byproducts such as corn cobs, rice hulls, oat hulls and sugar cane bagasse. Further details relating to furan resins whose use is contemplated in the present invention is set out in "Handbook of Thermoset Plastics", edited by Sidney H. Goodman, Edition 2, Published by William Andrew, 1998, ISBN 0815514212, 9780815514213, Chapter 3: Amino and Furan Resins, by Christopher C. Ibeh.

Furan resins are of particular interest because they are derived from natural, renewable sources, they bond well to natural fibres and they have good flame-retardancy properties.

The bio-resin preferably includes an acid catalyst. The catalyst promotes curing via condensation reactions, releasing water vapour. The bio-resin may further include a blocker component. The function of the blocker component is to affect the curing behaviour of the bio-resin. Thus, the first and second bio-resins may differ in composition, based on the content and/or type of catalyst and/or the content and/or type of blocker component. This allows the second bio-resin to cure faster and/or at a lower temperature than the first bio-resin component.

The present inventors have realised in particular that if the bio-resins applied to the first and second layers are identical, then during the curing step in which the wet sandwich is heated and pressed, the bio-resin at the first face of the natural fibre mat will cure first, in view of the temperature gradient across the wet sandwich. However, the cured bio-resin can form a thermal barrier, thus reducing the flow of heat to the second face of the mat for curing of the bio-resin at that location. This results either in incomplete curing of the bio-resin at the second face or in an unacceptably long curing time for the panel. Without wishing to be bound by theory, the present inventors therefore consider that promoting curing of the bio-resin at the second face at a lower temperature and/or at a faster rate than the bio-resin at the first face can lead to significantly improved properties of the cured panel.

References in this disclosure to the second bio-resin cures faster and/or at a lower temperature than the first bio-resin relate to analysis of the respective bio-resins under identical conditions when subjected to heating up to their respective curing temperatures at the same rate of heating. It will be understood that the behaviour of the first and second bio-resins in situ in the composite depends heavily on the thermal gradient across the composite. However, in situ during the process of the present invention, it is preferred that the second bio-resin is cured before the first bio-resin is completely cured.

The present inventors have also arrived at an important realisation in terms of moisture management during the curing process. Curing of the bio-resin typically takes place via condensation reactions and therefore releases water vapour. Since the core of the panel is formed of paper or card, release of large quantities of water vapour into the core can cause unacceptable reductions in strength of the core. Furthermore, it is considered that if the bio-resin at the first face of the natural fibre mat is allowed to cure before the bio-resin at the second face, then moisture generated during curing of the second face may become trapped in the core, leading to weakening of the core. Again, the inventors make these observations without wishing to be bound by theory.

During the curing step, preferably steam release means are provided. The curing step typically takes place in a heated moulding press. Known moulding presses are known for moulding polyurethane-containing products. Such moulding presses are typically operated in a carefully sealed condition, in view of the health and safety issues surrounding the curing of polyurethane. However, for the panels of the present invention, it is preferred instead that a steam vent is provided. The steam vent may take the form of an additional process step, in which the mould press is opened (at least partially) during the curing step in order to release steam that has been generated during the heating and curing of the panel. In that case, the mould press is typically then closed again to complete the curing of the panel. The steam vent may take place at 1 minute or less from the closure of the moulding press, more preferably at 45 seconds or less from the closure of the moulding press. Additionally or alternatively, the steam vent may take the form of a gap provided in the mould press throughout the curing step, the gap being placed so as to provide a suitable exit route for steam generated during the heating and curing of the panel.

It is possible to consider the cycle time of the manufacture of a panel according to the present invention. The cycle time is considered to be the time between corresponding steps in the manufacture of a first panel and a subsequent panel in the same moulding apparatus. Preferably, the cycle time here is 150 seconds or less. More preferably, the cycle time is 120 second or less, e.g. about 100 seconds.

Preferably, the viscosity of the first bio-resin at room temperature is lower than that of the second bio-resin under the same conditions. This allows the first bio-resin to penetrate more deeply into the natural fibre mat. The second bio-resin in contrast penetrates less deeply and so is available for providing a secure bond between the core and the skin layer. In order to provide this difference in viscosity, the first and second bio-resins, at the time of application to the natural fibre mat, may differ in water content. It is preferred that the first bio-resin has a higher water content than the second bio-resin. In view of this higher water content, the partially impregnated natural fibre mat may be subjected to a drying step after application of the first bio-resin and before the application of the second bio-resin. The water content of the second bio-resin is preferably 10wt% or less. The water content of the first bio-resin (after an optional drying step of the impregnated mat) is preferably 10wt% or less. However, the water content of the first bio-resin at the time of impregnation into the first face of the natural fibre mat may be higher than 10wt%, e.g. 15wt% or higher, or 20wt% or higher.

The first bio-resin preferably also includes a mould-release agent. This is preferred in order to assist in release of the cured panel from a corresponding mould. Preferably, the second bio-resin does not include a mould-release agent, since it is not needed at the interface between the paper core and the skin layer. Inclusion of a mould-release agent in the second bio-resin would likely have the effect of deleteriously reducing the strength of the panel.

The first bio-resin preferably also includes a filler component. The filler component can provide greater structural integrity to the free faces of the panel after curing. The filler is preferably a particulate filler such as a quartz-based powder. The average particle size of the filler may be less than 100µm, e.g. about 30µm. The first bio-resin may include up to about 30wt% filler, more preferably up to about 20wt% filler.

Preferably, different amounts by weight of bio-resin are applied to the first and second faces of the natural fibre mat. Typically, more bio-resin is applied to the first face than to the second face. For example, 1.5-3 times by weight the amount of bio-resin may be applied to the first face than to the second face. Typically, the bio-resin may be applied to the second face in an amount of 100-200gm⁻². Typically, the bio-resin may be applied to the first face in an amount of 200-500gm⁻².

In some embodiments, it is preferred for the fibre mats to be fully impregnated with the first resin prior to the drying step.

The basis weight of the natural fibre mat is preferably in the range 400-800gm⁻².

The natural fibre mat may include continuous reinforcing yarn laid at or close to the surface of the mat. The reinforcing yarn preferably runs across the width and/or length of the mat. This can provide substantial reinforcement to the panel, further improving the mechanical properties of the panel. The reinforcing yarn should be continuous and thus may be synthetic. However, by weight the proportion of continuous reinforcing yarn in the finished panel is typically very low.

Further optional features of the invention are set out below.

### BRIEF DESCRIPTION OF THE DRAWINGS

Embodiments of the invention will now be described by way of example with reference to the accompanying drawings in which:
Fig. 1 illustrates a typical natural fibre mat manufacturing process.
Fig. 2 shows a schematic bio-resin coating and drying plant according to an embodiment of the invention.
Fig. 3 shows a modified schematic bio-resin coating and drying plant according to an embodiment of the invention.
Fig. 4 shows another modified schematic bio-resin coating and drying plant according to an embodiment of the invention.
Fig. 5 shows a schematic moulding process for moulding a panel according to an embodiment of the invention.
Figs. 6 and 7 show schematic views of impregnated natural fibre mats according to embodiments of the invention.
Figs. 8 and 9 show schematic cross sectional view of composite panels according to embodiments of the invention.

### DETAILED DESCRIPTION OF THE PREFERRED EMBODIMENTS, AND FURTHER OPTIONAL FEATURES OF THE INVENTION

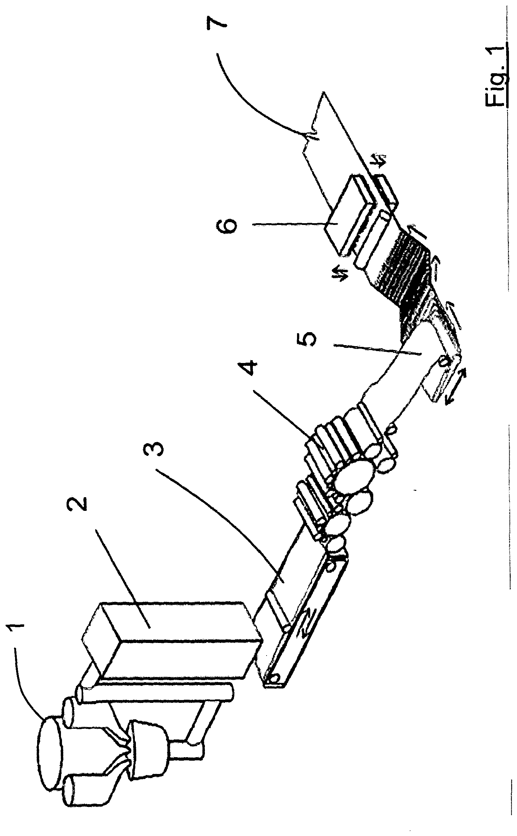

Fig.1 illustrates a production line for the preparation of a natural fibre mat 7 (hereinafter called "the mat"), wherein natural fibre is mixed in a mixer 1 and dispensed from a hopper 2 on to a chute feed conveyor 3. The fibres are aligned in a carding machine 4 and passed through a cross lapper 5. The cross lapped layers are then consolidated in a needle punch machine 6. The resulting mat 7 is then rolled up for further treatment or passed directly to a resin coating plant. The basis weight of the natural fibre mat is typically in the range 400-800gm⁻², e.g. 600gm⁻².

It is mentioned here that reinforcing yarn may be included in the mat, at or near the surface of the mat. The reinforcing yarn my be incorporated into the mat during the cross-lapping process. In the process, a stack of offset overlying layers of natural fibre web are laid by cross-lapping and the reinforcing yarn is added to each layer at the same time as, or immediately before, the layer is laid. The reinforcing yarn is provided only at or near one or more edge of the layer, so that after cross-lapping, the reinforcing yarn is located only at positions at or near to one or more surfaces of the stack. Further detail relating to this process is set out in International patent application PCT/GB2011/001472 (unpublished at the time of writing this disclosure).

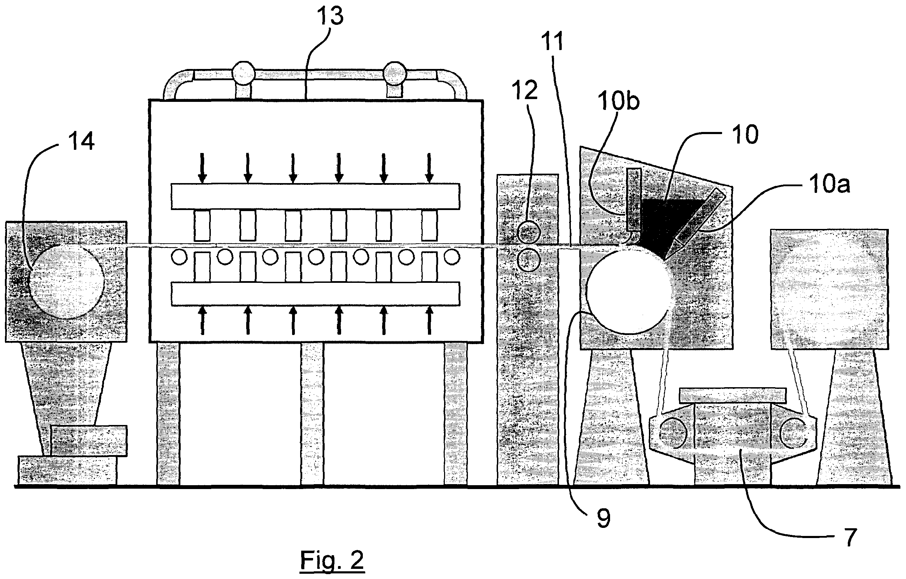

Fig.2 illustrates a typical scheme 8 for the production of resin-coated mat having one side of the fibre mat coated with bio-resin. Untreated mat 7 is unwound and passed over a chromed roller 9 which forms one side of a bio-resin bath 10 containing a first bio-resin. Rear blade 10a defines the rearward extent of the bio-resin bath. The first bio-resin (resin A) is thereby applied to the first face (face A) of the mat. A J-profile scraper blade 10b is used to press bio-resin A into the mat and to ensure uniformity of loading of bio-resin A in face A.

The one-side-coated mat 11 is then passed through a pair of calendar rollers 12 and is dried in an oven 13 in order to reduce the water content of the one-side-coated mat 11. In the process shown in Fig. 2, the one-side coated mat is then rolled up into a roll 14. The one-side coated mat may then be treated in order that the second face (face B) of the mat is coated with a second bio-resin (resin B). This may be carried out, for example, using a roller-coater or spray coater 14. The second bio-resin differs from the first bio-resin as explained in more detail below. The weight (per unit area) of bio-resin applied to the second face is lower than the weight (per unit area) of bio-resin applied to the first face.

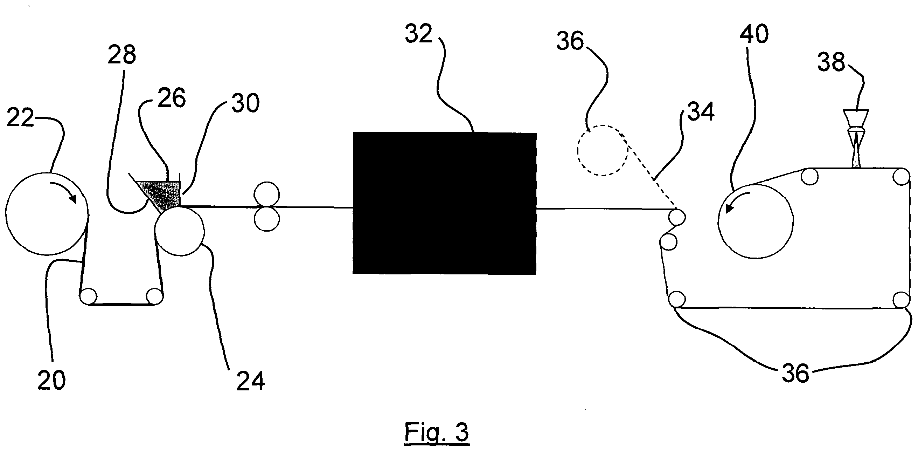

In modified embodiments of the process, resins A and B can be applied to the different faces of the mat in a single process. For example, Fig. 3 shows a schematic view of the modified process. Dry natural fibre mat 20 is unwound from roll 22 and passed over chromed roller 24. Face B of the mat is in contact with the roller 24 and face A is exposed to resin bath 26 which is defined by rear blade 28, front J-scraper blade 30 and the roller 24. In this way, resin A is impregnated into the A face of the mat. The one-side coated mat is then passed through oven 32 to reduce the water content of resin A. On exit from the oven, release paper 34 from release paper roll 36 may be applied over the A face of the one-side coated mat. The mat is then inverted using a series of rollers 36 so that face B of the mat faces upwardly. Resin B is then sprayed onto face B using sprayer 38. The coated mat is then rolled up on roll 40.

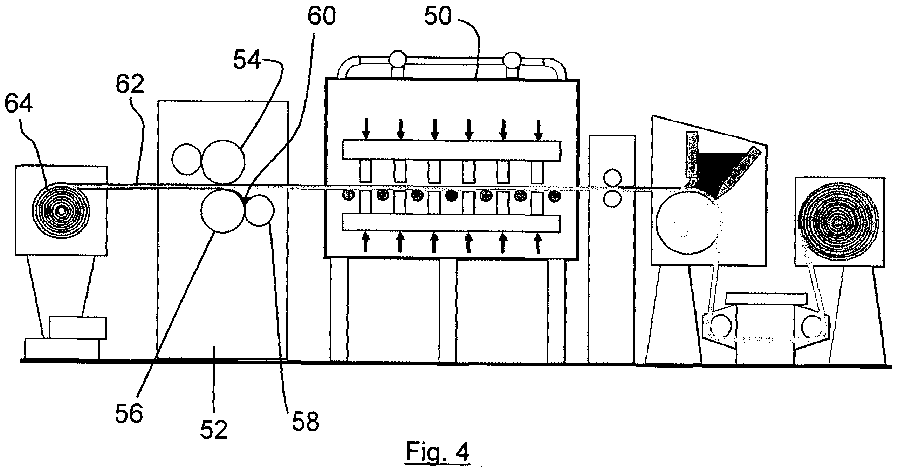

A further modified process is illustrated in Fig. 4. The initial stages of the process are similar to Fig. 2 and so are not described again here. On exit from drying oven 50, the one-side coated mat reaches double roller coater 52. Upper roller 54 acts in opposition to lower roller 56. A reservoir 60 of resin B is maintained between lower roller 56 and auxiliary roller 58. Reservoir 60 ensures a consistent thickness of resin B is maintained on lower roller 56, and so ensures a consistent application of resin B to the B face of the mat. The impregnated mat 62 is then wound on roll 64.

The resulting resin coated mat can then be transported or taken directly to a moulding press.

It is possible for the resin-impregnated mat to be pressed and heated in order to form a cured board. However, in the preferred embodiment of the present invention, a paper or card honeycomb core is placed between two of the resin-impregnated mats to form a sandwich construction. For each mat, face B is placed in contact with the core and face A is the outward face of the sandwich construction. The sandwich construction is then pressed and heated in order to cure the bio-resin, compress the mats to form skins and achieve a bond between the core and the skins. The result is a composite panel suitable for load-bearing applications, e.g. as the boot load floor of a car.

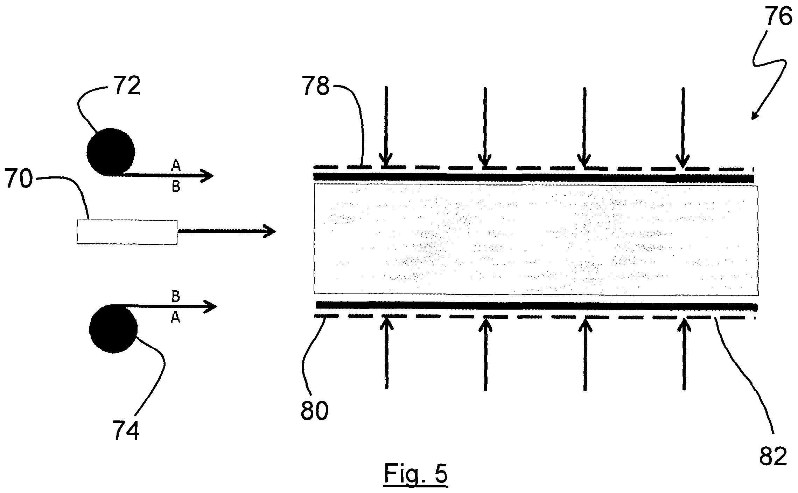

Fig. 5 shows a schematic moulding process for moulding a panel according to an embodiment of the invention. Paper honeycomb core 70 is provided and two rolls 72, 74 of resin-impregnated natural fibre mat as described above are also provided. The upper layer 72 of impregnated mat is contacted with the core with the B face in contact with the core and the A face uppermost. The lower layer 74 of impregnated mat is contacted with the core with the B face in contact with the core and the A face lowermost. A wet sandwich construction is therefore provided. This can be cut to shape as required, e.g. by guillotine.

The wet sandwich is then placed in a moulding press 76 having upper 78 and lower 80 mould plates. Each mould plate includes a series of gaps 82 which allow steam to be vented during the curing step.

Bio-resins A and B are each based on furan resin. Furan resin can be obtained, for example, from TransFurans Chemicals bvba, Industriepark Leukaard 2, 2440 GEEL, Belgium, under the trade name BioRez™, for example BioRez™ 050525 S 1B. Each bio-resin is cured via a heat-activated catalyst. The curing temperature of this resin is in the range 140-190 degrees C. Storage of this product at 20-25 degrees C is possible for extended periods, e.g. up to one month or longer. A suitable catalyst is maleic acid.

This is preferred since it is considered not to have an adverse effect on the natural fibres of the mat. An alternative catalyst is citric acid. Suitable furan resin can be obtained by the following process. Hemicellulosic agricultural waste (e.g. waste from sugar cane) are rich in pentose sugars. Controlled hydrolysis of pentose sugars gives furfural. This is converted to furfuryl alcohol by catalytic hydrogenation. Furfuryl alcohol can then be formed into prepolymers of furfuryl alcohol, which is the base material of the resin.

One particular advantage of furan resin is that it is substantially free from volatile organic solvents. Furthermore, during the curing process, water is formed from condensation reactions which occur as the resin crosslinks.

Bio-resin A has a lower viscosity at room temperature than bio-resin B. This allows bio-resin A to penetrate more deeply into the mat. Bio-resin B in contrast penetrates less deeply and so is available for providing a secure bond between the core and the skin layer. At the time of its application to the mat, bio-resin A has a higher water content than bio-resin B, this contributing to the lower viscosity.

It is in view of this higher water content, that the partially impregnated mat is subjected to a drying step as shown in Fig. 2. After the drying step, bio-resin A has a water content of 10wt% or less.

Bio-resin B has a water content of 10wt% or less, and so there is no need for a further drying step after application of bio-resin B to face B of the mat.

Bio-resin A includes a mould-release agent, but bio-resin B does not. The mould-release agent is Diamond Coat 3551BX.

Bio-resin A includes about 20wt% of a filler component, but bio-resin B does not. The filler is quarz powder with average particle size of about 30µm. A suitable filler is quartz flour (Microsil® M) available from Sibelco Benelux.

Bio-resin A is applied to face A of the mat at about 250-300gm⁻². Bio-resin B is applied to face B of the mat at about 100-150gm⁻2.

Suitable curing temperatures for resins A and B are as follows. Resin A cures at 170°C. Resin B cures at 140° C.

Suitable resins for use as resins A and B are BioRez™ 050525 and BioRez™ 080101, respectively, available from TransFurans Chemicals bvba.

During the curing step, steam is produced from the condensation reactions taking pace in the bio-resin and also due to further drying of the mats and the resin. The moulding press may be opened briefly shortly after the beginning of the curing step in order to vent steam. This may take place after 1 minute of the curing step, but preferably it takes place after about 30 seconds of the curing step. The moulding press is then closed in order to continue with the curing step. Alternatively, as shown in Fig. 5, steam vent openings may be provided in the moulding press in order to release steam throughout the curing step.

As will be understood, a particular advantage of the preferred embodiments of the invention is that the natural fibre mat can be supplied as a pre-impregnated mat with resin A and with resin B already applied in the correct quantity and distribution. This will then allow a board manufacturer to the place two sheets either side of a core and to produce the composite sandwiched construction in a one-shot process. For high volume manufacture, this is an efficient approach to the manufacture of load bearing panels.

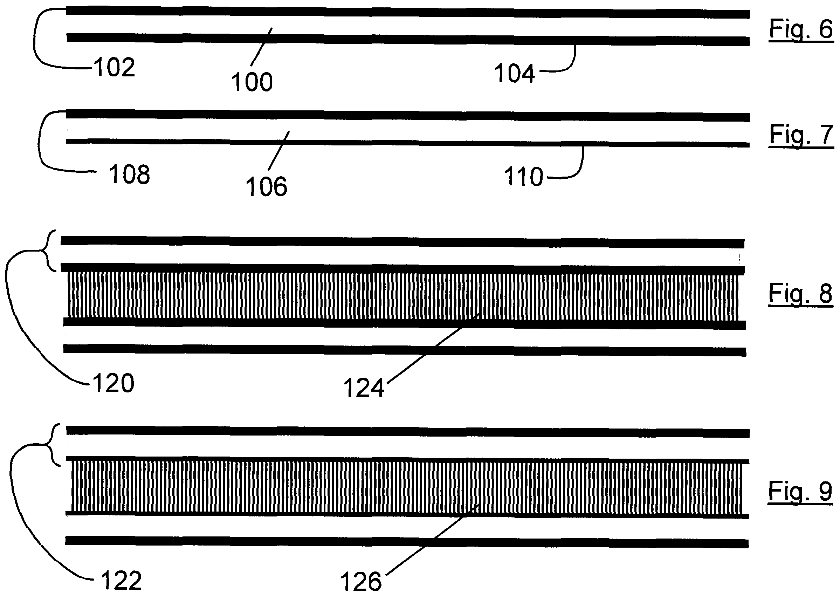

Figs. 6 and 7 show schematic views of impregnated natural fibre mats according to embodiments of the invention. In Fig. 6, natural fibre mat 100 has resin A 102 coated and impregnated at the A face and resin B 104 coated and impregnated at the B face. The loading of resins A and B is substantially equal. In contrast, in Fig. 7, natural fibre mat 106 has resin A 108 coated and impregnated at the A face and resin B 110 coated and impregnated at the B face. The loading of resin A is significantly greater than the loading of resin B.

Figs. 8 and 9 show schematic cross sectional views of composite panels according to embodiments of the invention. Outer skins 120 and 122 adhere to a core 124 and 126 of paper or card honeycomb. Fig. 8 illustrates the use of fibre mat corresponding to Fig. 6 having a similar weight loading of bio-resin on face A and face B of the mats. Fig. 9 illustrates the use of fibre mat corresponding to Fig. 7 having a greater weight loading of bio-resin on face A than on face B of the mats.

### Examples

A natural fibre mat was formed of flax fibre using cross lapping and needle punching as illustrated in Fig. 1. The basis weight of the natural fibre mat was 600gm⁻². Some of the fibre mats included reinforcing yarn (TwinTex, obtained from OCV Reinforcements), located at the surface of the mats. The TwinTex yarn was constituted from glass filaments and polypropylene filaments.

Resin A was applied to face A of the mat using a resin bath and J-scraper blade as illustrated in Fig. 2. The amount per unit area of resin A applied was varied. The partially impregnated mat was then dried for 150 seconds at 116°C in order to reduce the water content of resin A from about 10wt% to about 6wt%.

Resin B was applied to face B of the mat by roller coating. The amount of resin B applied per unit area was 150gm⁻².

A paper honeycomb core was placed between the prepreg mats, with face B of each mat in contact with the core. The resultant sandwich construction was then placed in a moulding press, which was operated to press and heat the sandwich. The moulding press was controlled in order to provide a steam vent step at different times during the curing process. The moulding press was operated at different temperatures in order to asses the effect of mould temperature. In some examples, the moulding press was modified in order to provide gaps evenly spaced between the mould plates around the periphery of the mould, these gaps being provided in order to assist with venting of steam.

The manufactured panels were of dimensions 900mm x 500mm x 15mm.

After cooling, each panel was subjected to mechanical testing by supporting the panel along the 500mm edge on both sides up to 25mm from the edge and placing weights at the centre of the panel. The load required to achieve a 20mm deflection of the centre of the panel was determined. The results are shown in Table 1.

**Table 1**

| Example No. | Resin A (gm⁻²) | Resin B (gm⁻²) | Curing temp (°C) | Vent time (min) | Curing time (min) | Vent gaps | Filler | Reinforcing yarn | 20mm deflection load (kg) |
|---|---|---|---|---|---|---|---|---|---|
| 1 | 350 | 150 | 155 | 1 | 3 | No | No | No | 27 |
| 2 | 350 | 150 | 155 | 1 | 2 | No | No | No | 29 |
| 3 | 350 | 150 | 155 | 0.5 | 3 | No | No | No | 31 |
| 4 | 350 | 150 | 155 | 0.5 | 2 | No | No | No | 33 |
| 5 | 350 | 150 | 155 | 0.5 | 2 | No | Yes | No | 35 |
| 6 | 350 | 150 | 155 | 0.5 | 2 | No | Yes | Yes | 38 |
| 7 | 350 | 150 | 170 | 0.5 | 2 | No | Yes | No | 37 |
| 8 | 300 | 150 | 170 | 0.5 | 2 | No | Yes | No | 39 |
| 9 | 300 | 150 | 170 | 0.5 | 2 | Yes | Yes | No | 41 |
| 10 | 300 | 150 | 170 | 0.5 | 2 | Yes | Yes | Yes | 45 |

A first comparative example panel is manufactured based on Example 1 except that Resin A is applied to each of faces A and B. The load required to achieved 20mm deflection is 15kg. A second comparative example panel is manufactured based on Example 1 except that Resin B is applied to each of faces A and B. The panel is destroyed on removal from the mould due to resin B at faces A sticking to the mould.

## Claims

1. A natural fibre mat at least partially impregnated with furan resin, the natural fibre mat having a first face (A face) at least partially impregnated with a first bio-resin and a second face (B face) at least partially impregnated with a second bio-resin, wherein the second bio-resin differs from the first bio-resin in terms of composition, quantity, curing temperature, curing speed, viscosity and/or water content, and wherein the first bio-resin is a furan resin and the second bio-resin is a furan resin.

2. A method of manufacturing a natural fibre mat at least partially impregnated with furan resin, the method including the steps:
(i) providing a natural fibre mat having a first face (A face) and a second face (B face);
(ii) applying a first bio-resin to the first face of the natural fibre mat to at least partly impregnate the first face of the natural fibre mat with the first bio-resin;
(iii) applying a second bio-resin to the second face of the natural fibre mat to at least partly impregnate the second face of the natural fibre mat with the second bio-resin, wherein the application of the bio-resins to the respective faces of the natural fibre are carried out using different application processes and wherein the second bio-resin differs from the first bio-resin in terms of composition, quantity, curing temperature, curing speed, viscosity and/or water content, and wherein the first bio-resin is a furan resin and the second bio-resin is a furan resin.

3. A method for manufacturing a composite load bearing panel having a sandwich construction with a paper or card cellular core and upper and lower skin layers comprising natural fibre and cured furan resin, wherein the method includes the steps:
(i) providing a natural fibre mat having a first face (A face) and a second face (B face);
(ii) applying a first bio-resin to the first face of the natural fibre mat to at least partly impregnate the first face of the natural fibre mat with the first bio-resin;
(iii) applying a second bio-resin to the second face of the natural fibre mat to at least partly impregnate the second face of the natural fibre mat with the second bio-resin;
(iv) providing a paper or card cellular core;
(v) for each side of the core, applying a portion of the impregnated natural fibre mat onto the core so that the second face of the impregnated natural fibre mat is in contact with the core, thereby forming a wet sandwich construction; and
(vi) pressing and heating the wet sandwich construction so as to compress the impregnated natural fibre mat and cure the first and second bio-resins,
wherein the second furan resin differs from the first furan resin in terms of composition, quantity, curing temperature, curing speed, viscosity and/or water content, and wherein the first bio-resin is a furan resin and the second bio-resin is a furan resin.

4. A method according to claim 3 wherein the application of the bio-resins to the respective faces of the natural fibre are carried out using different application processes.

5. A method according to any one of claims 2 to 4 or a mat according to claim 1 wherein a greater amount of the first bio-resin is applied to the first face than of the second bio-resin applied to the second face.

6. A method according to any one of claims 2 to 5 or a mat according to claim 1 or claim 5 wherein the natural fibre mat has, or is dried to have, a moisture content of less than 5wt%.

7. A method according to any one of claims 2 to 6 wherein, after the application of the first bio-resin and before the application of the second bio-resin, the partially-impregnated natural fibre mat is subjected to a drying step.

8. A method according to any one of claims 2 to 7 or a mat according to claim 1 where the second bio-resin differs from the first bio-resin in that the second bio-resin cures faster and/or at a lower temperature than the first bio-resin.

9. A method according to any one of claims 2 to 8 wherein during the curing step, a steam vent is provided, the steam vent optionally comprising an additional process step in which a mould press is opened at least partially during the curing step in order to release steam that has been generated during the heating and curing of the panel and the mould press is subsequently closed again to complete the curing of the panel, the steam vent optionally further comprising at least one gap provided in the mould press throughout the curing step, the gap being placed so as to provide a suitable exit route for steam generated during the heating and curing of the panel.

10. A method according to any one of claims 2 to 9 wherein the viscosity of the first bio-resin during the application step is lower than that of the second bio-resin.

11. A method according to any one of claims 2 to 10 wherein the water content of the first bio-resin is higher than 10wt%, and/or the water content of the second bio-resin is 10wt% or less.

12. A method according to any one of claims 2 to 11 wherein the first bio-resin includes a mould-release agent.

13. A method according to any one of claims 2 to 12 wherein the first bio-resin includes a particulate filler component.

14. A composite load bearing panel having a sandwich construction with a paper or card cellular core and upper and lower skin layers comprising natural fibre and cured furan resin, wherein each skin layer has a first face (A face) and a second face (B face), the first face comprising a cured first bio-resin, the second face comprising a cured second bio-resin and the second face being in contact with and bonded to the core, and wherein the second bio-resin differs from the first bio-resin in terms of composition, quantity, curing temperature, curing speed, viscosity and/or water content, and wherein the first bio-resin is a furan resin and the second bio-resin is a furan resin.

## Patentansprüche

1. Naturfasermatte, die zumindest teilweise mit Furanharz imprägniert ist, wobei die Naturfasermatte eine erste Oberfläche (A-Oberfläche), die zumindest teilweise mit einem ersten Bioharz imprägniert ist, und eine zweite Oberfläche (B-Oberfläche), die zumindest teilweise mit einem zweiten Bioharz imprägniert ist, aufweist, wobei das zweite Bioharz sich von dem ersten Bioharz in Bezug auf Zusammensetzung, Menge, Härtungstemperatur, Härtungsgeschwindigkeit, Viskosität und/oder Wassergehalt unterscheidet und wobei das erste Bioharz ein Furanharz ist und das zweite Bioharz ein Furanharz ist.

2. Verfahren zur Herstellung einer Naturfasermatte, die zumindest teilweise mit Furanharz imprägniert ist, wobei das Verfahren folgende Schritte umfasst:
(i) das Bereitstellen einer Naturfasermatte mit einer ersten Oberfläche (A-Oberfläche) und einer zweiten Oberfläche (B-Oberfläche);
(ii) das Aufbringen eines ersten Bioharzes auf die erste Oberfläche der Naturfasermatte, um die erste Oberfläche der Naturfasermatte zumindest teilweise mit dem ersten Bioharz zu imprägnieren;
(iii) das Aufbringen eines zweiten Bioharzes auf die zweite Oberfläche der Naturfasermatte, um die zweite Oberfläche der Naturfasermatte zumindest teilweise mit dem zweiten Bioharz zu imprägnieren,
wobei das Aufbringen der Bioharze auf die jeweilige Oberfläche der Naturfasermatte unter Anwendung verschiedener Aufbringverfahren durchgeführt wird und wobei das zweite Bioharz sich in Bezug auf Zusammensetzung, Menge, Härtungstemperatur, Härtungsgeschwindigkeit, Viskosität und/oder Wassergehalt von dem ersten Bioharz unterscheidet und wobei das erste Bioharz ein Furanharz ist und das zweite Bioharz ein Furanharz ist.

3. Verfahren zur Herstellung eines lasttragenden Verbundpaneels mit Sandwich-Aufbau mit einem Papier- oder Kartonzellkern und einer oberen und unteren Hautschicht, die Naturfaser und gehärtetes Furanharz umfassen, wobei das Verfahren folgende Schritte umfasst:
(i) das Bereitstellen einer Naturfasermatte mit einer ersten Oberfläche (A-Oberfläche) und einer zweiten Oberfläche (B-Oberfläche);
(ii) das Aufbringen eines ersten Bioharzes auf die erste Oberfläche der Naturfasermatte, um die erste Oberfläche der Naturfasermatte zumindest teilweise mit dem ersten Bioharz zu imprägnieren;
(iii) das Aufbringen eines zweiten Bioharzes auf die zweite Oberfläche der Naturfasermatte, um die zweite Oberfläche der Naturfasermatte zumindest teilweise mit dem zweiten Bioharz zu imprägnieren;
(iv) das Bereitstellen eines Papier- oder Kartonzellkerns;
(v) das Aufbringen eines Abschnitts der imprägnierten Naturfasermatte auf jeder Seite des Kerns auf den Kern, so dass die zweite Oberfläche der imprägnierten Naturfasermatte den Kern berührt, wodurch eine feuchte Sandwich-Konstruktion gebildet wird; und
(vi) das Pressen und Erhitzen der feuchten Sandwich-Konstruktion, um die imprägnierte Naturfasermatte zusammenzudrücken und das erste und zweite Bioharz zu härten,
wobei sich das zweite Furanharz von dem ersten Furanharz in Bezug auf Zusammensetzung, Menge, Härtungstemperatur, Härtungsgeschwindigkeit, Viskosität und/oder Wassergehalt von dem ersten Bioharz unterscheidet und wobei das erste Bioharz ein Furanharz ist und das zweite Bioharz ein Furanharz ist.

4. Verfahren nach Anspruch 3, wobei das Aufbringen der Bioharze auf die jeweilige Oberfläche der Naturfaser unter Anwendung verschiedener Aufbringverfahren erfolgt.

5. Verfahren nach einem der Ansprüche 2 bis 4 oder Matte nach Anspruch 1, wobei eine größere Menge des ersten Bioharzes auf die erste Oberfläche aufgebracht wird als des zweiten Bioharzes auf die zweite Oberfläche.

6. Verfahren nach einem der Ansprüche 2 bis 5 oder Matte nach Anspruch 1 oder 5, wobei die Naturfasermatte einen Feuchtigkeitsgehalt von weniger als 5 Gew.-% aufweist oder getrocknet wird, um diesen aufzuweisen.

7. Verfahren nach einem der Ansprüche 2 bis 6, wobei nach Aufbringen des ersten Bioharzes und vor dem Aufbringen des zweiten Bioharzes die teilweise imprägnierte Naturfasermatte einem Trocknungsschritt unterzogen wird.

8. Verfahren nach einem der Ansprüche 2 bis 7 oder Matte nach Anspruch 1, wobei sich das zweite Bioharz von dem ersten Bioharz dadurch unterscheidet, dass das zweite Bioharz rascher und/oder bei einer niedrigeren Temperatur härtet als das erste Bioharz.

9. Verfahren nach einem der Ansprüche 2 bis 8, wobei während des Härtungsschritts ein Dampfventil bereitgestellt ist, wobei das Dampfventil gegebenenfalls einen zusätzlichen Verfahrensschritt umfasst, bei dem eine Formpresse während des Härtungsschritts zumindest teilweise geöffnet wird, um Dampf abzulassen, der während des Erhitzens und Härtens des Paneels erzeugt wurde, wonach die Formpresse wieder geschlossen wird, um das Härten des Paneels abzuschließen, wobei das Dampfventil gegebenenfalls außerdem zumindest eine Lücke umfasst, die in der Formpresse während des gesamten Härtungsschritts bereitgestellt ist, wobei die Lücke angeordnet ist, um einen geeigneten Austrittsweg für den während des Erhitzens und Härtens des Paneels erzeugten Dampfes bereitzustellen.

10. Verfahren nach einem der Ansprüche 2 bis 9, wobei die Viskosität des ersten Bioharzes während des Aufbringungsschritts geringer ist als jene des zweiten Bioharzes.

11. Verfahren nach einem der Ansprüche 2 bis 10, wobei der Wassergehalt des ersten Bioharzes mehr als 10 Gew.-% beträgt und/oder der Wassergehalt des zweiten Bioharzes 10 Gew.-% oder weniger beträgt.

12. Verfahren nach einem der Ansprüche 2 bis 11, wobei das erste Bioharz ein Formtrennmittel umfasst.

13. Verfahren nach einem der Ansprüche 2 bis 12, wobei das erste Bioharz einen teilchenförmigen Füllstoff umfasst.

14. Lasttragendes Verbundpaneel mit Sandwich-Aufbau mit einem Papier- oder Kartonzellkern und einer oberen und unteren Hautschicht, die Naturfaser und gehärtetes Furanharz umfassen, wobei jede Hautschicht eine erste Oberfläche (A-Oberfläche) und eine zweite Oberfläche (B-Oberfläche) aufweist, wobei die erste Oberfläche ein gehärtetes erstes Bioharz umfasst, die zweite Oberfläche ein gehärtetes zweites Bioharz umfasst und die zweite Oberfläche mit dem Kern in Kontakt steht und haftschlüssig mit diesem verbunden ist und wobei sich das zweite Bioharz von dem ersten Bioharz in Bezug auf Zusammensetzung, Menge, Härtungstemperatur, Härtungsgeschwindigkeit, Viskosität und/oder Wassergehalt von dem ersten Bioharz unterscheidet und wobei das erste Bioharz ein Furanharz ist und das zweite Bioharz ein Furanharz ist.

## Revendications

1. Tapis de fibre naturelle au moins partiellement imprégné de résine de furane, le tapis de fibre naturelle ayant une première face (face A) au moins partiellement imprégnée d'une première bio-résine et une seconde face (face B) au moins partiellement imprégnée d'une seconde bio-résine, dans lequel la seconde bio-résine diffère de la première bio-résine en termes de composition, de quantité, de température de durcissement, de vitesse de durcissement, de viscosité et/ou de teneur en eau, et dans lequel la première bio-résine est une résine de furane et la seconde bio-résine est une résine de furane.

2. Procédé de fabrication d'un tapis de fibre naturelle au moins partiellement imprégné de résine de furane, le procédé comprenant les étapes consistant à :
(i) fournir un tapis de fibre naturelle ayant une première face (face A) et une seconde face (face B) ;
(ii) appliquer une première bio-résine sur la première face du tapis de fibre naturelle pour imprégner au moins partiellement la première face du tapis de fibre naturelle avec la première bio-résine ;
(iii) appliquer une seconde bio-résine sur la seconde face du tapis de fibre naturelle pour imprégner au moins partiellement la seconde face du tapis de fibre naturelle avec la seconde bio-résine,
dans lequel l'application des bio-résines sur les faces respectives de la fibre naturelle est réalisée en utilisant des procédés d'application différents et dans lequel la seconde bio-résine diffère de la première bio-résine en termes de composition, de quantité, de température de durcissement, de vitesse de durcissement, de viscosité et/ou de teneur en eau, et dans lequel la première bio-résine est une résine de furane et la seconde bio-résine est une résine de furane.

3. Procédé de fabrication d'un panneau porteur composite ayant une construction en sandwich avec un noyau cellulaire en papier ou en carton et des couches de peau supérieure et inférieure comprenant une fibre naturelle et une résine de furane durcie, dans lequel le procédé comprend les étapes consistant à :
(i) fournir un tapis de fibre naturelle ayant une première face (face A) et une seconde face (face B) ;
(ii) appliquer une première bio-résine sur la première face du tapis de fibre naturelle pour imprégner au moins partiellement la première face du tapis de fibre naturelle avec la première bio-résine ;
(iii) appliquer une seconde bio-résine sur la seconde face du tapis de fibre naturelle pour imprégner au moins partiellement la seconde face du tapis de fibre naturelle avec la seconde bio-résine ;
(iv) fournir un noyau cellulaire en papier ou en carton ;
(v) pour chaque côté du noyau, appliquer une partie du tapis de fibre naturelle imprégné sur le noyau de sorte que la seconde face du tapis de fibre naturelle imprégné est en contact avec le noyau, en formant ainsi une construction en sandwich humide ; et
(vi) presser et chauffer la construction en sandwich humide de façon à comprimer le tapis de fibre naturelle imprégné et à durcir les première et seconde bio-résines, dans lequel la seconde résine de furane diffère de la première résine de furane en termes de composition, de quantité, de température de durcissement, de vitesse de durcissement, de viscosité et/ou de teneur en eau, et dans lequel la première bio-résine est une résine de furane et la seconde bio-résine est une résine de furane.

4. Procédé selon la revendication 3, dans lequel l'application des bio-résines sur les faces respectives de la fibre naturelle est réalisée en utilisant des procédés d'application différents.

5. Procédé selon l'une quelconque des revendications 2 à 4 ou tapis selon la revendication 1, dans lequel une plus grande quantité de la première bio-résine est appliquée sur la première face par rapport à la seconde bio-résine appliquée sur la seconde face.

6. Procédé selon l'une quelconque des revendications 2 à 5 ou tapis selon la revendication 1 ou la revendication 5, dans lequel le tapis de fibre naturelle a, ou est séché pour avoir, une teneur en humidité inférieure à 5 % en poids.

7. Procédé selon l'une quelconque des revendications 2 à 6 dans lequel, après l'application de la première bio-résine et avant l'application de la seconde bio-résine, le tapis de fibre naturelle partiellement imprégné est soumis à une étape de séchage.

8. Procédé selon l'une quelconque des revendications 2 à 7 ou tapis selon la revendication 1, dans lequel la seconde bio-résine diffère de la première bio-résine en ce sens que la seconde bio-résine durcit plus vite et/ou à une température plus basse que la première bio-résine.

9. Procédé selon l'une quelconque des revendications 2 à 8, dans lequel au cours de l'étape de durcissement, un évent de vapeur est prévu, l'évent de vapeur comporte de manière facultative une étape de traitement supplémentaire dans laquelle une presse de moulage est ouverte au moins partiellement pendant l'étape de durcissement afin de libérer la vapeur qui a été générée pendant le chauffage et le durcissement du panneau et la presse de moulage est ensuite refermée pour achever le durcissement du panneau, l'évent de vapeur comprenant en outre de manière facultative au moins un espace agencé dans la presse de moulage pendant toute l'étape de durcissement, l'espace étant placé de manière à fournir un trajet de sortie approprié pour la vapeur générée pendant le chauffage et le durcissement du panneau.

10. Procédé selon l'une quelconque des revendications 2 à 9, dans lequel la viscosité de la première bio-résine pendant l'étape d'application est inférieure à celle de la seconde bio-résine.

11. Procédé selon l'une quelconque des revendications 2 à 10, dans lequel la teneur en eau de la première bio-résine est supérieure à 10 % en poids, et/ou la teneur en eau de la seconde bio-résine est de 10 % en poids ou moins.

12. Procédé selon l'une quelconque des revendications 2 à 11, dans lequel la première bio-résine comprend un agent de démoulage.

13. Procédé selon l'une quelconque des revendications 2 à 12, dans lequel la première bio-résine comprend un composant de charge particulaire.

14. Panneau porteur composite ayant une construction en sandwich avec un noyau cellulaire en papier ou en carton et des couches de peau supérieure et inférieure comprenant une fibre naturelle et une résine de furane durcie, chaque couche de peau ayant une première face (face A) et une seconde face (face B), la première face comprenant une première bio-résine durcie, la seconde face comprenant une seconde bio-résine durcie et la seconde face étant en contact avec le noyau et liée à celui-ci, et dans lequel la seconde bio-résine diffère de la première bio-résine en termes de composition, de quantité, de température de durcissement, de vitesse de durcissement, de viscosité et/ou de teneur en eau, et dans lequel la première bio-résine est une résine de furane et la seconde bio-résine est une résine de furane.
